# EUROPEAN PATENT SPECIFICATION

(11) **EP 2 613 903 B1**
(45) Date of publication and mention of the grant of the patent: **05.08.2015**
(21) Application number: 11757397.2
(22) Date of filing: 05.09.2011
(51) Int. Cl.: B23B 51/02, B23B 51/06, C23C 30/00

(54) **BORE CUTTING TOOL AND METHOD OF MAKING THE SAME**
BOHRSCHNEIDWERKZEUG UND HERSTELLUNGSVERFAHREN DAFÜR
OUTIL DE COUPE DE TROU DE FORAGE ET SON PROCÉDÉ DE FABRICATION

(30) Priority: 08.09.2010 GB 201014966
(43) Date of publication of application: 17.07.2013
(73) Proprietor: Sandvik Intellectual Property AB, 811 81 Sandviken (SE)
(72) Inventor: GREEN, Jamie, Wakefield WF4 1NF (GB); GOULBOURNE, David, Sheffield S60 5BJ (GB)
(74) Representative: Jedlöv, Cecilia
(86) International application number: PCT/GB2011/001304
(87) International publication number: WO 2012/032286

(56) References cited:
- EP-A2- 0 787 820
- DE-A1- 10 243 403
- DE-A1- 19 648 971
- FR-A1- 2 801 234
- US-A- 5 935 323
- US-B1- 6 524 036

## Description

The present invention relates to a bore cutting tool according to the preamble of claim 1, an example bing known from FR2801234A1, and method of making a bore cutting tool according to the preamble of claim 10 in particular such bore cutting tools for metal workpieces, and in particular twist drills.

One of the major influences in tool life when machining metals is the lubrication (also referred to as coolant) applied. If a machining process is run 'dry' (without lubrication) the tool life is dramatically reduced when compared to a machining process which has lubrication present.

This is because the lubrication reduces the 'µ' value (coefficient of friction) between the surfaces of contact, i.e. tool and workpiece. Reducing the value of µ leads to a reduction in friction between the contactable surfaces, which consequently leads to a reduction in tool wear and heat generation.

There are four basic forms of lubrication: Hydrodynamic lubrication, where two sliding surfaces are separated by a film of liquid which is held between them by local pressure; elastohydrodynamic lubrication, where two sliding surfaces are separated by a very thin film of fluid which is held between them by higher forms local pressure; mixed lubrication, where two surfaces are partly separated by a liquid film and partly in contact with each other; and boundary lubrication, where two surfaces are mostly in contact with each other, even though there is a fluid present. In boundary lubrication, it is believed that the film thickness between the two surfaces is in the range 0.001 to 0.05 µm [Dwyer-Joyce, R.S (1995) The Tribology Group Institution of Mechanical Engineers, 'Tribological Design Data Part 2: Lubrication', 2, 10]

It is understood that during metal machining with a bore cutting tool, such as drilling, the type of lubrication present is boundary lubrication where the two surfaces are mostly in contact with each other with very little lubricating fluid.

Accelerated tool wear caused by inefficient lubrication can give rise to reduced tool performance, for example poor hole reproducibility.

Ideally, in order to reduce tool wear the film thickness needs to be increased between the two surfaces, for example the cylindrical land and the workpiece. Theoretically this will reduce the value of µ at the point of contact between the two surfaces. However, an increase in film thickness is difficult to achieve

Embodiments of the present invention address the drawbacks discussed above. The present inventors have surprisingly found that existing levels of lubricant usage can be retained whilst improving the lubricating effect. That is, without necessarily increasing the amount of lubricant used during a cutting process, improvements in tool wear can be achieved.

At its most general, the present invention proposes that a bore cutting tool is provided with a plurality of pits in a surface of the bore cutting tool wherein a coating is applied over the pits, for retaining lubricant at the surface during use.

The present invention provides a bore cutting tool as defined in claim 1 comprising
a tool substrate; and
a tool coating on a surface of the tool substrate
wherein the bore cutting tool comprises a plurality of pits in the surface of the tool substrate and wherein the tool coating extends over the pits such that the pit surface comprises the tool coating.

The present inventors have found that excellent performance can be achieved by providing a pit that is formed in the tool substrate and then coated, rather than a pit formed in the coating. Indeed, in experiments, the present inventors found that pits formed after coating, for example by laser etching into the coating, caused damage to the coating in the area around the pit. For example, significant cracking of the coating was observed some distance from the pit. This can lead to premature tool failure. Furthermore, uneven and inconsistent pit dimensions were produced.

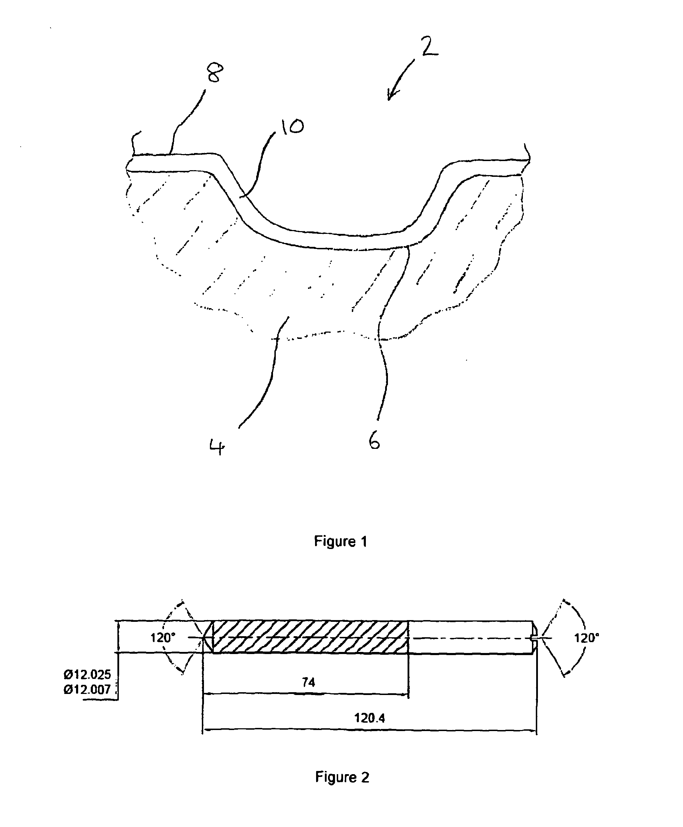

A further advantage of the coated pit structure of embodiments of the present invention is that the properties of the coating are retained in respect of the surface of the tool between the pits, right up to the periphery of a pit. Furthermore, the advantageous properties of the coating are also provided to the pits themselves because the coating follows the contours of the pits. Figure 1 illustrates a typical pit in cross-section, showing the coating extending over the pit surface so as to provide the coating as the pit surface.

With regard to the coating of the pits, the present inventors have found that whilst some variation of the coating thickness may be observed in and around the pits (which variation might be attributable to the known corner and edge effects associated with deposition of coatings onto drill geometries), the pits are effectively provided with a coating such that the surface of the pits (i.e. the inner surface of the pits) comprises coating material. In embodiments this assists in retaining the pit dimensions over prolonged tool life.

A further advantage is that a comparatively smooth pit surface can be achieved by virtue of the coating applied to the pit.

The present inventors have found that the pits, with their coated surface, are particularly effective at retaining lubricant, for example acting as reservoirs for the lubricant.

In embodiments of the present invention, the thickness of the lubricant film can be increased as compared to a bore cutting tool without the pits.

Suitably this generates areas of hydrodynamic lubrication where the fluid is forced into the pits as the tool surface comes into contact with the workpiece.

Preferably the average pit depth is at least 5µm, more preferably at least 8 µm. Suitably the average pit depth is no more than 50µm, preferably no more than 25µm and most preferably no more than 15µm. A particularly preferred average pit depth is in the range 8 µm to 25 µm. Average pit depth can be measured using white light interferometry as discussed herein.

Suitably the average pit width and average pit length are independently selected from 20µm to 400µm, more preferably 40µm to 250µm. In the case of circular pits, the diameter is of course the width and length. Average pit width and average pit length can be measured using white light interferometry.

Suitably the average pit cross-sectional area is in the range 0.005 mm² to 1 mm². Again, this can be measured using white light interferometry.

Suitably the average pitch (centre to centre spacing) is in the range 50µm to 350µm, preferably 50µm to 250µm, more preferably 50µm to 150µm. Again, this can be measured using white light interferometry or SEM.

Suitably the average density of the pits is in the range 5 to 50 pits/mm², preferably 20 to 30 pits/mm² with about 24 pits/mm² being preferred.

The pits can be any suitable shape, for example elongate (e.g. round ended or round cornered rectangles), circular, triangular or rectangular. It is preferred that the pits are round ended or round cornered rectangles, also referred to herein as slot-shaped pits or slots.

Suitably the plurality of pits are an array of pits. That is, the plurality of pits are suitably arranged in a non-random pattern. Suitably the spacing between adjacent pits is the same for at least the majority of, preferably substantially all of, the pits in the array. Preferably the pits are arranged as a plurality of rows of pits, suitably with substantially equal spacing between the rows. A grid pattern is particularly preferred.

Suitably the plurality of pits are present only on at least one surface of the bore cutting tool which in use is in frictional contact with the workpiece. As explained herein, a preferred bore cutting tool is a twist drill and in twist drill embodiments the twist drill has a cylindrical land and the plurality of pits is present only on the cylindrical land. Suitably at least 50% of the cylindrical land is provided with pits, preferably substantially all of the cylindrical land is provided with pits. The present inventors have found that by providing pits on the cylindrical land of a twist drill, considerable improvements in tool performance can be achieved, as discussed in the examples herein.

Preferably the tool coating has an average thickness of at least 0.5µm, more preferably at least 1µm. Suitably an upper limit for the average thickness is 10µm, preferably 5µm. A preferred coating thickness is in the range 1 µm to 5 µm.

The bore cutting tool can be partially or fully coated. Preferably the coating is a wear resistant coating, suitably having a lower coefficient of friction than the uncoated tool.

Suitable coatings include metal nitride based coating (e.g. TiN, AlxTiyN, etc.), metal oxide based coating (e.g. AlxO, AlxCryO, etc.), carbon based coating (e.g. DLC, Diamond Coating, etc.) and combinations thereof. Preferably the tool coating comprises a nitride coating, suitably a metal nitride based coating, more preferably TiAlN.

Suitable coating methods include vapour deposition, for example physical vapour deposition (PVD), or other vacuum deposition techniques, and chemical vapour deposition (CVD).

The pits can suitably be created by a laser or electron beam. For convenience, the preferred use of a laser is discussed herein but this should be understood to also be a reference to use of an electron beam. Suitably the pits are formed by laser etching of the tool substrate prior to forming the tool coating. For example, laser etching systems used for marking metal components can be applied to bore cutting tools to produce the desired plurality of pits.

The desired pattern of the array is programmed into the laser controller and the laser is then operated so as to provide the cutting tool with the pits according to that pattern.

Typically, the laser is moved with respect to the tool (or blank). Suitably the tool or blank is rotated. Alternatively or additionally the laser source is moved over the surface of the tool.

Preferably the bore cutting tool is a round tool. Suitably the bore cutting tool is selected from a twist drill, an end mill, a reamer and a tap. Preferably the bore cutting tool is a twist drill. Suitably the twist drill is a metal working twist drill.

Whilst the bore cutting tool (e.g. twist drill) is generally for cutting metal workpieces, it can also be adapted for other workpiece materials such as composites and ceramics.

Preferably the tool substrate is made of carbide. A preferred carbide is tungsten carbide. Alternative materials include high speed steel (HSS), HSCo and HSCoXP, silicon nitride and PCD (polycrystalline diamond), or combinations thereof (for example PCD mounted on a metal body).

The present invention provides a method of making a bore cutting tool as defined in claim 10 having a plurality of pits on a surface of the bore cutting tool, the method comprising the steps of forming a plurality of pits in the surface of a tool substrate, and coating the pitted surface of the tool substrate to form a tool coating.

The preferred pit dimensions, pit geometry and pattern of pits discussed above with respect to the first aspect also apply to this aspect as method steps of forming the pits.

Similarly, it is preferred that the method is a method of making a twist drill.

Suitably the step of forming pits is a step of forming pits by laser etching of the tool substrate.

Suitably the step of forming the plurality of pits comprises forming pits in a tool blank and machining the blank to form the tool substrate.

Suitably the method includes the step of cleaning the surface in which the pits are formed, for example to remove flash. Preferably the cleaning step comprises an outer diameter grind.

Embodiments of the present invention will now be described with reference to the accompanying figures, in which:
Figure 1 shows a cross-section of a pit comprising a coated surface;
Figure 2 shows a tool blank (twist drill blank) to which an array of pits is applied in the hatched area;
Figure 3 shows a pattern of pits applied to a tool blank, the pits having an elongate "slot" shape;
Figure 4 shows an SEM image of a cylindrical land of a twist drill comprising an array of pits;
Figure 5 shows the results of white light analysis (using a Wyko white light interferometer) of a pit presented as a cross-section or profile in the width direction (short axis of the pit);
Figure 6 shows an SEM image of pits after coating with TiAlN; and

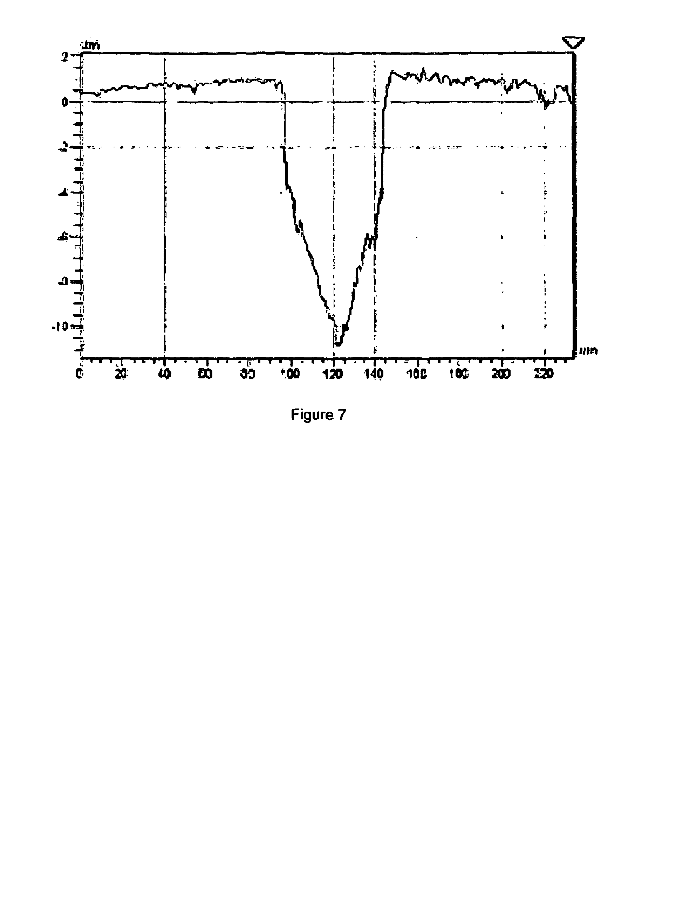

Figure 7 shows the results of white light analysis (using a Wyko white light interferometer) of a pit presented as a cross-section or profile in the width direction (short axis of the pit).

For the avoidance of doubt, the term "pit" as used herein refers to a closed-end pore or blind hole. Preferred pit dimensions are described herein.

For the avoidance of doubt, the term "bore cutting tool" as used herein refers to a cutting tool adapted to cut a workpiece so as to form a bore, including reshaping or modifying an existing bore (whether or not other types of cutting or removal of workpiece material can also be performed by the tool). A preferred class of bore cutting tools is round tools. Preferred round tools include twist drills, end mills, reamers and taps. Twist drills are particularly preferred. Whilst any twist drill geometry can be used, a point angle of 90° to 180° is preferred.

For the avoidance of doubt, the term "array of pits" as used herein refers to a plurality of pits arranged in an ordered, regular or non-random pattern. An example of an array of pits is a plurality of rows of pits, with substantially equal spacing between adjacent pits and respective rows.

Figure 1 illustrates a cross-section taken at the surface portion of a bore cutting tool 2 according to the present invention. The tool substrate 4 is provided with a pit 6, for example by laser etching. A tool coating 8 is then applied to the pitted tool substrate. The tool coating follows the contour of the pit so that the surface of the pit 10 comprises tool coating. The resultant pit has a comparatively smooth and homogenous surface. There is a smooth transition from the substantially flat main surface of the tool and the "inner" surface of the pit. When the bore cutting tool is provided with a plurality of such pits, the tool is adapted to work efficiently with lubricant (for example MQL) by retaining lubricant in the pits.

### Examples and Testing

### Example 1

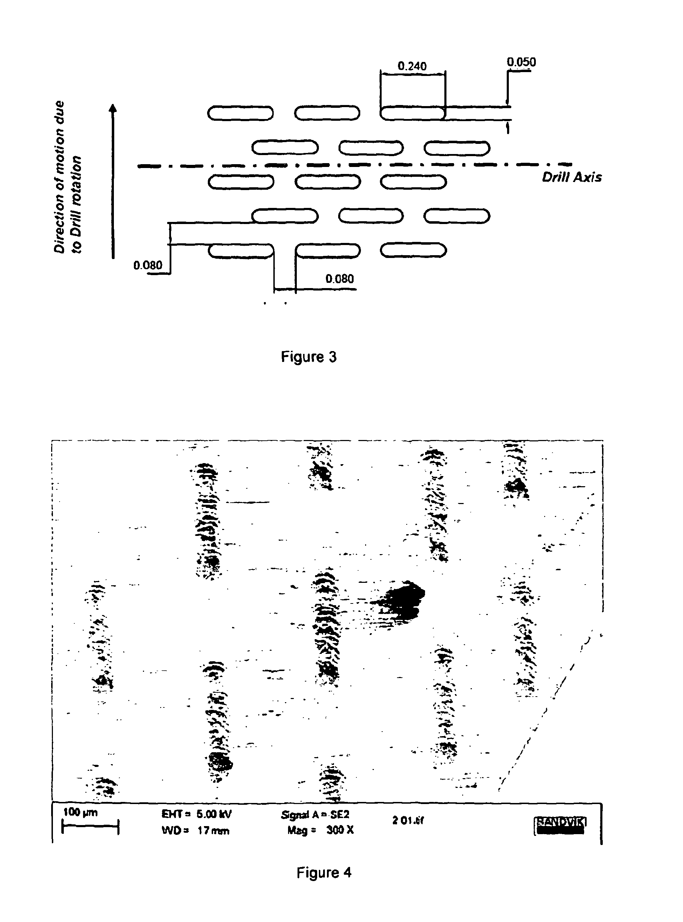

A tungsten carbide rod was machined so as to produce a twist drill blank having a diameter of 12mm. The blank was provided with an ordered pattern (array) of pits in the surface of the blank corresponding to the drill body, by laser etching. The area to which the pattern was applied is shown in Figure 2. The pattern applied to the blank is shown in Figure 3. The pattern comprises "slot" shaped elongate pits arranged with their longer axis parallel to the main longitudinal axis of the drill (perpendicular to the direction of drill rotation). The pit density was programmed to be about 24 pits/mm². SEM analysis indicated that burr or flash was present around the periphery of the pits. The blanks were therefore surface cleaned using an outer diameter grind to remove the flash. The resultant pits in the tool blank surface are shown in Figure 4, which illustrates that substantially no flash remains.

The absence of flash was confirmed by white light interferometry using a Wyko white light analyser. White light analysis permits imaging of the 3D surface of the tool. From the acquired data, cross-sections or profiles of the pits can be viewed and measurements of pit depth (at deepest point), width (at widest point) and length (at longest point) can be made, as well as cross-sectional area (at surface). An example of a pit profile across the short axis (width) of the pit is shown in Figure 4.

The tool blank was then machined so as to produce a drill geometry corresponding to Dormer Tools' CDX R553 commercial product.

The cylindrical land is the only part of the twist drill that retains the pattern of pits. The rest of the surface of the tool blank is removed during the machining steps.

From SEM and white light analysis the following pit dimensions were obtained:
Average pit width = 60µm
Average pit depth = 11µm
Average pit length = 230µm
Average height of flash = 0µm
Pit spacing was selected by appropriate programming of the laser apparatus: approx 320µm (centre to centre in length direction) and approx 130µm (centre to centre in width direction). Other centre to centre spacings are possible, for example 100µm to 200µm.

The twist drill was then coated with TiAlN using a standard deposition technique. The depth of TiAlN coating on the tool substrate was about 1µm. The coating was applied to all of the twist drill, including the cylindrical land. The coating extends over the pits so that, in cross-section, the tool comprises pits in the tool substrate with a layer of TiAlN following the contour of the pit (e.g. as illustrated in Figure 1). Other coatings can be used instead of TiAlN.

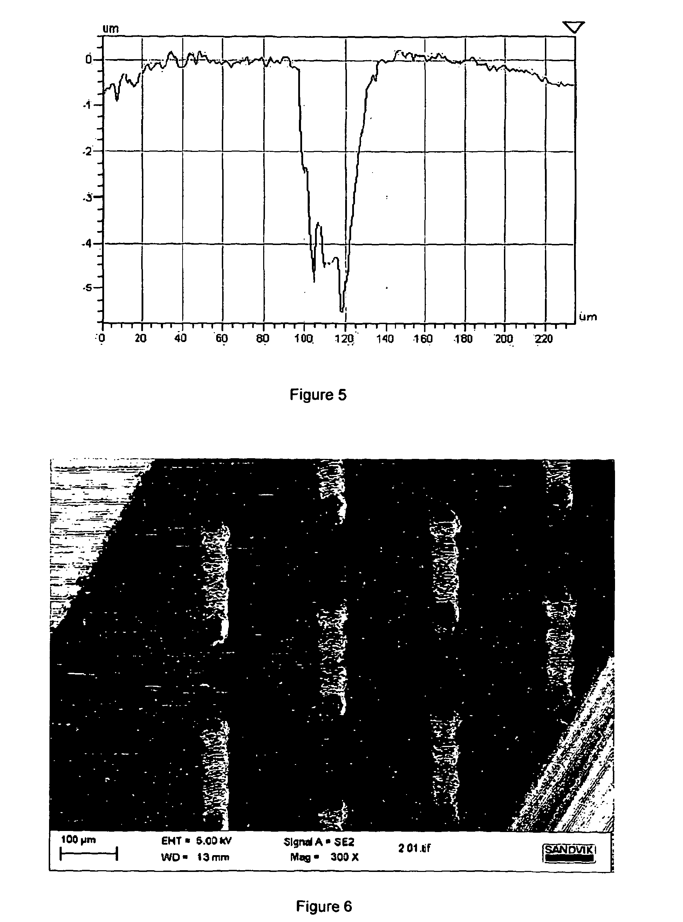

The coated pits are shown in Figure 5. A white light analysis width profile of a pit after coating is shown in Figure 6.

From SEM and white light analysis after coating the following pit dimensions were obtained:
Average pit width = 60µm
Average pit depth = 9µm
Average pit length = 230µm
Average height of flash = 0µm

### Example 2

The same procedure as Example 1 was followed except that the laser dwelling time was slightly longer during the laser texturing step.

After coating, the average pit width was measured as 50µm, the average pit length 220µm and the average pit depth 11µm.

### Comparative Example 1

A twist drill without pits was made in the same way as Example 1 except laser texturing was not applied.

### Tests

Examples 1 and 2 and Comparative Example 1 were tested using two workpiece materials: AMG 1.5 (steel alloy) and AMG 4.3 (Titanium alloy). AMG 4.3 is particularly demanding because drilling of Ti workpieces is known to generate high temperatures and can even cause combustion of the Ti.

The following conditions and settings were used in Test 1:
Machine: DMU-60
Material: AMG 1.5 (W No. 1.2312)
Drill geometry: R553
Diameter: 12.00mm
Drill length: 5 x diameter
Drill depth: 36mm blind holes
Coating: TiAlN
Coolant: MQL
Number of holes: 10 holes per test per tool
Monitoring equipment: analySIS software and microscope, and Kistler Dynamometer (9123C 1011, with Dyno Wear Software) to monitor cutting thrust and torque.
Surface speed: 48mm/min
Feed: 0.15mm/rev
Spindle speed: 1273 rpm
Penetration rate: 190mm/min

Once the holes were completed, the holes were measured using a Renishaw probe (MP700 OMP70) at depths of 10mm and 30mm.

The thrust force and torque measurements showed that twist drills comprising an array of pits on the cylindrical land experience acceptable levels of thrust and torque.

The hole size measurements (using the Renishaw probe) showed that both of Example 1 and Example 2 produced "tighter" holes than Comparative Example 1. Indeed, both examples achieved a mean hole tolerance of H7, whereas Comparative Example 1 achieved only H9 (ISO 286 "Limits and fits").

Furthermore, good hole size reproducibility was also achieved.

The following conditions and settings were used in Test 2:
Machine: DMU-60
Material: AMG 4.3 (Ti-6 Al-4V) / ASTM B265
Drill geometry: R553
Diameter: 12.00mm
Drill length: 5 x diameter
Drill depth: 14mm through holes
Coating: TiAlN
Coolant: MQL
Number of holes: 3 holes per test per tool
Monitoring equipment: analySIS software and microscope and Kistler Dynamometer (to monitor cutting thrust and torque)
Surface speed: 25mm/min
Feed: 0.135mm/rev
Spindle speed: 663 rpm
Penetration rate: 90mm/min

Once the holes were completed, the holes were measured using the Renishaw probe at depths of 5mm and 10mm.

The thrust force and torque measurements showed that twist drills comprising an array of pits on the cylindrical land experience acceptable levels of thrust and torque in the Ti workpiece. Indeed, the torque levels experienced in Ti were significantly lower for Examples 1 and 2 as compared to Comparative Example 1.

The hole size measurements (using the Renishaw probe) showed that both of Example 1 and Example 2 produced "tighter" holes than Comparative Example 1 when used in the Ti workpiece. Furthermore, particularly at a depth of 5mm, the spread of hole size is smaller for Examples 1 and 2 as compared to Comparative Example 1.

The consistent hole sizes achieved by the laser textured tools indicate that the laser textured tools are reducing the frictional properties of the tool. In particular, the excellent hole size spread at 5mm suggests that the work piece material begins to cool and restore its original shape, thus minimising the possibility of "snatching". In particular, the reduction in the heat generation can reduce the extent of expansion of the workpiece material thus reducing the "closing in" of the hole on the tool, which effect can cause "grabbing" of "snatching" of the tool.

The test results demonstrate that excellent hole quality can be achieved, particularly in the case of a Ti workpiece.

Furthermore, especially in the case of the challenging Ti workpiece, a reduced torque value is experienced. This indicates that the tool is under less stress, potentially leading to improved tool life with concomitant improvements in tool productivity. The reduction in torque may also permit reduced power consumption, thus generating savings in machine overheads and of course benefitting the environment.

Furthermore, the results show that laser textured tools may be particularly suitable for use with minimum quantity lubrication (MQL) because they optimise the use of the comparatively small amounts of lubricant which are applied to the tool and workpiece in MQL. This permits a reduction in the environmental impact as a result of reduced waste lubricant and a reduction in the cost for the disposal or reclamation of lubricant.

## Claims

1. A bore cutting tool comprising
a tool substrate (4); and
a tool coating (8) on a surface of the tool substrate (4), wherein
the bore cutting tool comprises a plurality of pits (6) in the surface of the tool substrate (4),
**characterized in that** the tool coating (8) follows the contour of each of the plurality of pits (6).

2. A bore cutting tool according to claim 1, wherein the average pit (6) depth is at least 8 µm, optionally wherein the average pit (6) depth is in the range 8 µm to 25 µm.

3. A bore cutting tool according to claim 1 or claim 2, wherein the average pit (6) cross-sectional area is in the range 0.005 mm² to 1 mm².

4. A bore cutting tool according to any one of the preceding claims, wherein the plurality of pits (6) is an array of pits (6).

5. A bore cutting tools according to any one of the preceding claims, wherein the plurality of pits (6) is present only on at least one surface of the bore cutting tool which in use is in frictional contact with the workpiece.

6. A bore cutting tool according to any one of the preceding claims, wherein the bore cutting tool is a twist drill having a cylindrical land and the plurality of pits (6) is present only on the cylindrical land.

7. A bore cutting tool according to any one of the preceding claims, wherein the tool coating (8) has an average thickness in the range 1 µm to 5 µm.

8. A bore cutting tool according to any one of the preceding claims, wherein the tool coating (8) comprises TiAlN.

9. A bore cutting tool according to any one of the preceding claims, wherein the pits (6) are formed by laser etching or electron beam etching of the tool substrate (4) prior to forming the tool coating (8).

10. A method of making a bore cutting tool having a plurality of pits (6) on a surface of the bore cutting tool, the method comprising the steps of forming a plurality of pits (6) in the surface of a tool substrate (4), and coating (8) the pitted surface of the tool substrate (4) to form a tool coating (8), **characterized in that** the tool coating (8) follows the contour of each of the plurality of pits (6).

11. A method according to claim 10, wherein the average depth of the pits (6) formed in the tool substrate (4) is at least 8 µm, optionally wherein the average depth of the pits (6) formed in the tool substrate (4) is in the range 8 µm to 25 µm.

12. A method according to claim 10 or 11, wherein the average cross-sectional area of the pits (6) formed in the tool substrate (4) is in the range 0.005 mm² to 1 mm².

13. A method according to any one of claim 10 to claim 12, wherein the plurality of pits (6) is an array of pits (6).

14. A method according to any one of claims 10 to claim 13, wherein the bore cutting tool is a twist drill and having a cylindrical land and the plurality of pits (6) is present only on the cylindrical land.

15. A method according to any one of claims 10 to claim 14, wherein the tool coating (8) has an average thickness in the range 1 µm to 5 µm.

16. A method according to any one of claims 10 to claim 15, wherein the tool coating (8) comprises TiAlN.

17. A method according to any one of claims 10 to claim 16, wherein the pits (6) are formed by laser etching or electron beam etching of the tool substrate (4).

18. A method according to any one of the claims 10 to claim 17, wherein the step of forming the plurality of pits (6) comprises forming pits (6) in a tool blank and machining the blank to form the tool substrate (4).

## Patentansprüche

1. Schneidwerkzeug zum Bohren, welches aufweist:
ein Werkzeugsubstrat (4), und
eine Werkzeugbeschichtung (8) auf einer Oberfläche des Werkzeugsubstrates (4), wobei das Schneidwerkzeug zum Bohren eine Mehrzahl von Vertiefungen (6) in der Oberfläche des Werkzeugsubstrates (4) aufweist, **dadurch gekennzeichnet, dass** die Werkzeugbeschichtung (8) der Kontur der Mehrzahl von Vertiefungen (6) folgt.

2. Schneidwerkezug zum Bohren nach Anspruch 1, wobei die durchschnittliche Tiefe einer Vertiefung (6) zumindest 8 µm beträgt, wobei die durchschnittliche Tiefe der Vertiefungen (6) optional in dem Bereich von 8 µm bis 25 µm liegt.

3. Schneidwerkzeug zum Bohren nach Anspruch 1 oder 2, wobei die durchschnittliche Querschnittsfläche einer Vertiefung (6) in dem Bereich von 0,005 mm² bis 1 mm² liegt.

4. Schneidwerkzeug zum Bohren, nach einem der vorstehenden Ansprüche, wobei die Mehrzahl von Vertiefungen (6) ein Feld bzw. ein Array von Vertiefungen (6) ist.

5. Schneidwerkzeug zum Bohren nach einem der vorstehenden Ansprüche, wobei die Mehrzahl von Vertiefungen (6) nur auf zumindest einer Oberfläche des Schneidwerkzeugs zum Bohren vorhanden ist, die im Gebrauch mit dem Werkstück in Reibungskontakt steht.

6. Schneidwerkzeug zum Bohren nach einem der vorstehenden Ansprüche, wobei das Bohrwerkzeug ein Spiralbohrer ist, der eine zylindrische Führungsfase hat und wobei die Mehrzahl von Vertiefungen (6) nur auf der zylindrischen Führungsfase vorhanden sind.

7. Schneidwerkzeug zum Bohren nach einem der vorstehenden Ansprüche, wobei die Werkzeugbeschichtung (8) eine durchschnittliche Dicke im Bereich von 1 µm bis 5 µm hat.

8. Schneidwerkzeug zum Bohren nach einem der vorstehenden Ansprüche, wobei die Werkzeugbeschichtung (8) TiAlN aufweist.

9. Schneidwerkzeug zum Bohren nach einem der vorstehenden Ansprüche, wobei die Vertiefung (6) durch Laserätzen oder Elektronenstrahlätzen des Werkzeugsubstrates (4) vor dem Herstellen der Werkzeugbeschichtung (8) gebildet werden.

10. Verfahren zum Herstellen eines Schneidwerkzeuges zum Bohren, welches eine Mehrzahl von Vertiefungen (6) auf einer Oberfläche des Schneidwerkzeugs zum Bohren hat, wobei das Verfahren die Schritte aufweist, dass eine Mehrzahl von Vertiefungen (6) in der Oberfläche eines Werkzeugsubstrates (4) ausgebildet wird und dass die mit Vertiefungen versehene Oberfläche des Substrates (4) beschichtet wird (8), um eine Werkzeugbeschichtung (8) zu bilden, **dadurch gekennzeichnet, dass** die Werkzeugbeschichtung (8) der Kontur jeder der Mehrzahl von Vertiefungen (6) folgt.

11. Verfahren nach Anspruch 10, wobei die durchschnittliche Tiefe der Vertiefungen (6), die in dem Werkzeugsubstrat (4) ausgebildet werden, zumindest 8 µm beträgt, wobei die durchschnittliche Tiefe der Vertiefungen (6), die in dem Werkzeugsubstrat (4) ausgebildet werden, optional in dem Bereich von 8 µm bis 25 µm liegt.

12. Verfahren nach Anspruch 10 oder 11, wobei die durchschnittliche Querschnittsfläche der in dem Werkzeugsubstrat (4) ausgebildeten Vertiefungen (6) in dem Bereich von 0,005 mm² bis 1 mm² liegt.

13. Verfahren nach einem der Ansprüche 10 bis 12, wobei die Mehrzahl von Vertiefungen (6) ein Feld bzw. ein Array von Vertiefungen (6) bildet.

14. Verfahren nach einem der Ansprüche 10 bis 13, wobei das Schneidwerkzeug zum Bohren ein Spiralbohrer ist, welcher eine zylindrische Führungsfase hat und wobei die Mehrzahl von Vertiefungen (6) nur auf der Führungsfase vorhanden ist.

15. Verfahren nach einem der Ansprüche 10 bis 14, wobei die Werkzeugbeschichtung (8) eine durchschnittliche Dicke im Bereich von 1 µm bis 5 µm hat.

16. Verfahren nach einem der Ansprüche 10 bis 15, wobei die Werkzeugbeschichtung (8) TiAlN aufweist.

17. Verfahren nach einem der Ansprüche 10 bis 16, wobei die Vertiefungen (6) durch Laserätzen oder durch Elektronenstrahlätzen des Werkzeugsubstrates (4) gebildet werden.

18. Verfahren nach einem der Ansprüche 10 bis 17, wobei der Schritt des Ausbildens der Mehrzahl von Vertiefungen (6) das Herstellen der Vertiefungen (6) in einem Werkzeugrohling und das maschinelle Bearbeiten des Rohlings zum Bilden des Werkzeugsubstrates (4) aufweist.

## Revendications

1. Outil d'alésage, comprenant :
un substrat d'outil (4) ; et
un revêtement d'outil (8) sur une surface du substrat d'outil (4), dans lequel :
l'outil d'alésage comprend une pluralité de creux (6) dans la surface du substrat d'outil (4),
**caractérisé en ce que** le revêtement d'outil (8) suit le contour de chacun de la pluralité de creux (6).

2. Outil d'alésage selon la revendication 1, dans lequel la profondeur moyenne du creux (6) est d'au moins 8 µm, facultativement dans lequel la profondeur moyenne du creux (6) est dans la plage de 8 µm à 25 µm.

3. Outil d'alésage selon la revendication 1 ou la revendication 2, dans lequel la surface moyenne du creux (6) est dans la plage de 0,005 mm² à 1 mm².

4. Outil d'alésage selon l'une quelconque des revendications précédentes, dans lequel la pluralité de creux (6) est un réseau de creux (6).

5. Outil d'alésage selon l'une quelconque des revendications précédentes, dans lequel la pluralité de creux (6) est présente uniquement sur au moins une surface de l'outil d'alésage qui, à l'usage, est en contact de friction avec la pièce à usiner.

6. Outil d'alésage selon l'une quelconque des revendications précédentes, dans lequel l'outil d'alésage est un foret hélicoïdal ayant une face de dépouille cylindrique et la pluralité de creux (6) est présente uniquement sur la face de dépouille cylindrique.

7. Outil d'alésage selon l'une quelconque des revendications précédentes, dans lequel le revêtement d'outil (8) a une épaisseur moyenne dans la plage de 1 µm à 5 µm.

8. Outil d'alésage selon l'une quelconque des revendications précédentes, dans lequel le revêtement d'outil (8) comprend du TiAlN.

9. Outil d'alésage selon l'une quelconque des revendications précédentes, dans lequel les creux (6) sont formés par gravure au laser ou gravure au faisceau électronique du substrat d'outil (4) avant de former le revêtement d'outil (8).

10. Procédé pour fabriquer un outil d'alésage ayant une pluralité de creux (6) sur une surface de l'outil d'alésage, le procédé comprenant les étapes consistant à former une pluralité de creux (6) dans la surface d'un substrat d'outil (4) et recouvrir (8) la surface comportant des creux du substrat d'outil (4) afin de former un revêtement d'outil (8), **caractérisé en ce que** le revêtement d'outil (8) suit le contour de chacun de la pluralité de creux (6).

11. Procédé selon la revendication 10, dans lequel la profondeur moyenne des creux (6) formés dans le substrat d'outil (4) est d'au moins 8 µm, facultativement dans lequel la profondeur moyenne des creux (6) formés dans le substrat d'outil (4) est dans la plage de 8 µm à 25 µm.

12. Procédé selon la revendication 10 ou 11, dans lequel la surface moyenne des creux (6) formés dans le substrat d'outil (4) est dans la plage de 0,005 mm² à 1 mm².

13. Procédé selon l'une quelconque des revendications 10 à 12, dans lequel la pluralité de creux (6) est un réseau de creux (6).

14. Procédé selon l'une quelconque des revendications 10 à 13, dans lequel l'outil d'alésage est un foret hélicoïdal et ayant une face de dépouille cylindrique et la pluralité de creux (6) est présente uniquement sur la face de dépouille cylindrique.

15. Procédé selon l'une quelconque des revendications 10 à 14, dans lequel le revêtement d'outil (8) a une épaisseur moyenne dans la plage de 1 µm à 5 µm.

16. Procédé selon l'une quelconque des revendications 10 à 15, dans lequel le revêtement d'outil (8) comprend du TiAlN.

17. Procédé selon l'une quelconque des revendications 10 à 16, dans lequel les creux (6) sont formés par gravure au laser ou gravure au faisceau électronique du substrat d'outil (4).

18. Procédé selon l'une quelconque des revendications 10 à 17, dans lequel l'étape consistant à former la pluralité de creux (6) comprend les étapes consistant à former des creux (6) dans une ébauche d'outil et usiner l'ébauche afin de former le substrat d'outil (4).
